(19) Europäisches Patentamt
European Patent Office
Office européen des brevets

(11) Publication number: **0 167 633 B1**

(12) **EUROPEAN PATENT SPECIFICATION published in accordance with Art. 158(3) EPC**

(45) Date of publication of patent specification: **03.07.91**

(51) Int. Cl.[5]: **A01N 25/10**

(21) Application number: **85900500.1**

(22) Date of filing: **28.12.84**

(86) International application number: **PCT/JP84/00630**

(87) International publication number: **WO 85/02977 (18.07.85 85/16)**

(54) **PEST-REPELLENT.**

(30) Priority: **29.12.83 JP 249000/83**
**20.02.84 JP 23700/84**

(43) Date of publication of application: **15.01.86 Bulletin 86/03**

(45) Publication of the grant of the patent: **03.07.91 Bulletin 91/27**

(84) Designated Contracting States: **FR**

(56) References cited: **GB-A- 1 326 825**

(73) Proprietor: **TAKIRON CO. LTD.**
**30, Azuchimachi 2-chome**
**Higashi-ku Osaka-shi Osaka 541(JP)**

Proprietor: **EARTH CHEMICAL CO., LTD.**
**3218-12, Sakoshi**
**Ako-shi Hyogo 678-01(JP)**

(72) Inventor: **SHIKINAMI, Yasuo Takiron Co., Ltd.**
**30, Azuchimachi 2-chome Higashi-ku**
**Osaka-shi Osaka 541(JP)**
Inventor: **HATA, Kunihiro Takiron Co., Ltd.**
**30, Azuchimachi 2-chome Higashi-ku, Osaka-shi**
**Osaka 541(JP)**
Inventor: **UTSUMI, Kiyoshi**
**Ishihara Apato 2 Go 1-58, Yamate**
**Aioi-shi Hyogo 678(JP)**
Inventor: **KIMURA, Hiroshi**
**2476-25, Kariya Tennozan Ako-shi**
**Hyogo 678-02(JP)**

(74) Representative: **Chameroy, Claude et al**
**c/o Cabinet Malemont 42, avenue du Président Wilson**
**F-75116 Paris(FR)**

EP 0 167 633 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a repellent material for harmful insects. More particularly, the present invention relates to a slow release insecticide formulation, which is applied to places where harmful insects such as flies, fleas, mites and cockroaches gather, such as food shops and food storage warehouses or to the interiors of precision machines and clean rooms and which shows an excellent repellent effect slow release and retains this effect for a long time.

BACKGROUND TECHNIQUES

As the method for repelling harmful insects to human bodies, for example, blood-sucking harmful insects such as mosquitoes, lice and mites, there is known a method in which such chemicals as dimethyl phthalate, 2-ethyl-1,3-hexane-diol and indalone are applied to the skin singly or in combination. Recently, as a new type of the insect-controlling material, there has been developed an insect-controlling sheet comprising a base material such as paper of fabric impregnated or surface-coated with an insecticide. However, with increase of the standard of living, feeling of cleanness is required, and hence, not only intrusion of harmful insects into places for handling foods or living spaces but also dispersion of dead bodies of harmful insects in these places is hated. Moreover, with rapid development of electronics or the medical industry, a high degree of cleanness is required in precision machines per se or spaces where these precision machines are handled. However, the above-mentioned insecticidal material for controlling insects often cause scattering of dead bodies of harmful insects and fails to satisfy the above requirement. Accordingly, development of a repellent material which has a high effect of preventing harmful insects from gathering to an applied place and which shows a good durability of this effect and an appropriately controlled chemical-releasing property has been eagerly desired.

In order to enhance the repellant capacity, it is important that the effect of the active chemical should be increased and furthermore, the concentration of the chemical to a base material should be increased and the chemical should be gradually vaporized into an outer space. A product formed by coating a base material with a mixture of a controlling agent and a paint is known. However, the thickness of the coating is limited, and even if the repellent chemical is incorporated at a high concentration, the total amount of the chemical is not increased and the repellent effect is limited. Moreover, if the chemical concentration is too high, the properties of the coating are degraded. Therefore, there may be considered a method in which a relatively thick base such as a fabric or paper is impregnated with an active chemical at an appropriate concentration. According to this method, however, the gradually releasing property cannot be controlled for a long time. Therefore, a product in which an active chemical is contained in an appropriate amount and the component of a base material has such a chemical and physical affinity with the active chemical that the gradually releasing property is controlled is required. Moreover, this harmful insect repellent product should be molded into a body capable of agreeing with the shape or configuration of a place or space where the product is set.

As the method for meeting the above requirements, there has been adopted a method in which a repellent, an insecticide, a mildew-proofing agent, a perfume and the like are incorporated into general-purpose thermoplastic resins such as polyethylene, polypropylene and polyvinyl chloride. Moreover, as the method for increasing the concentration of the active chemical, there has been adopted a method in which chemicals are supported on fillers of these plastics.

These thermoplastic resins have ordinarily a melting point higher than 100 °C, and therefore, in a method in which the active chemical is kneaded into a melt of a thermoplastic resin, decomposition or evaporation of the chemical is readily caused. Even if the amount of the chemical to be decomposed or evaporated is small, this amount is increased when the operation is continued for a long time, and this method is not practical in view of the safety and efficiency in the production process. For transpiration of the chemical from the surface of the base, it is indispensable that the chemical per se should be a substance which is liquid or solid at room temperature and has a relatively low vapor pressure, and a chemical having a high effect has an especially high transpirability at room temperature. If a large amount of such a chemical is kneaded into a plastic material having a high melting point, violent bleeding to the surface is caused simultaneously with decomposition of the chemical.

GB-A-1 326 825 describes a repellent composition comprising a solid repelling ingredient like cyclohex-imide or $\beta$-naphtol, scattered throughout a polymer matrix of chlorinated polyethylene

Under the above-mentioned background, we made research on harmful insect repellent material, and as the result, it was found that chlorinated polyethylene has a very good affinity with an amide type repelling ingredient which is liquid at normal temperature, the content of the active ingredient in the chlorinated

polyethylene can be increased, since the chlorinated polyethylene is powdery, it can be impregnated homogeneously with the amide type repelling ingredient, and the chlorinated polyethylene impregnated with the active ingredient can be advantageously formed into good granules for hot molding.

DISCLOSURE OF THE INVENTION

The present invention has now been completed based on the finding that a repellent material for harmful insects formed by mixing and hot-molding chlorinated polyethylene, an amide type repelling ingredient and a thermoplastic elastomer can be prepared safely and has a high repellent effect and this effect can be maintained over a long period.

Any of repelling ingredients, that can be mixed with synthetic resins can be used as the repellent chemical without any particular limitation in the present invention. However, amide type (N,N-diethyl-m-toluamide and N-butylacetoanilide) and amide ester type (propyl N,N-diethyl-succinnamate) repellent are preferably used.

At least one member selected from the foregoing chemicals is mixed with chlorinated polyethylene and formed into granules, and the granular mixture is kneaded with a thermoplastic elastomer and hot-molded. The repellent may be used in combination with an insecticide, a vermicide, a rodenticide, a repellent for rodential animals or a repellent for birds according to need.

As the thermoplastic elastomer, there can be mentioned elastomers having a low melting point, such as polyolefins (ethylene/propylene copolymer), styrene-butadiene type elastomers (styrene/butadiene copolymer), polyurethane type elastomers, polyester type elastomers, ethylene/propylene rubbers, ethylene/ethyl acrylate copolymers, ethylene/vinyl acetate copolymers and syndiotactic 1,2-polybutadiene. Thermoplastic elastomers having a melting point lower than 100°C are preferably used.

In the thermoplastic elastomer, the affinity with the repelling ingredient is influenced by chemical properties depending on the molecular chains structure (especially, the side chain and comonomer of the polymer).

In some elastomers (block copolymers, graft copolymers, random copolymers, homopolymers, blends and chemical modification products), it is considered that various restricted portions (frozen phase, hydrogen bond, crystal phase and ion-crosslinkage) are present in the rubber phase as the non-restricted component, and this structure controls retention and release of the chemical in various manners. Generally, since molecular chains are present in the random state in the rubber phase, the rubber phase acts as a chemical-retaining component, but since the restricted portions form aggregates where molecular chains are densely arranged, it is considered that the restricted portions act as a component for controlling the release of the active ingredient. It also is considered that the interfaces between blended polymers form fine paths for migration of the chemical from the interior of the molded body to the surface. It is considered that the effect of gradually releasing of the active ingredient is well-controlled by the above factors in combination. Chlorinated polyethylene is regarded as an ethylene/vinyl chloride/1,2-dichloroethylene terpolymer having a chlorine content of 30 to 45% by weight, and chlorinated polyethylene consists of a crystal phase and a rubber phase according to the degree of crystallinity of starting polyethylene. The restricted crystal phase is a pseudo-lamella hard phase. Chemically, chlorinated polyethylene has the following structure:

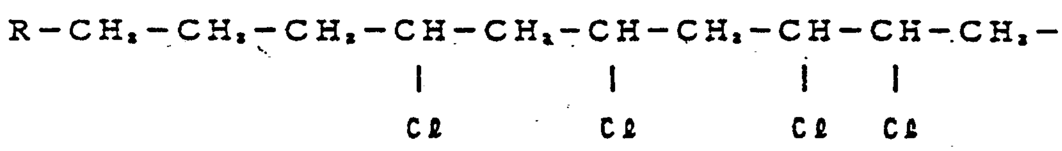

showing properties intermediate between those of polyethylene and polyvinyl chloride.

When this powdery chlorinated polyethylene having a degree of crystallinity below 5% is mixed with the above-mentioned repellent, the repellent is absorbed very well in the polymer.

In the case where the degree of crystallinity of chlorinated polyethylene is relatively high and 10 to 25%, at the initial stage of mixing, the active ingredient is hardly absorbed in chlorinated polyethylene, and the damp (wet) mixture of ingredient and chlorinated Polyethylene is formed. In the case where the degree of crystallinity is relatively low and up to 5%, and the powdery or granular state is maintained without blocking or bleeding. Accordingly, chlorinated polyethylene where the content of the restricted crystal phase is low, that is, the content of the rubber phase is high, is preferably used in the present invention.

Of the above-mentioned thermoplastic elastomers, those having a reduced polarity, such as polyolefins, styrene-butadiene rubbers and 1,2-polyamide, have no substantial affinity with the amide type repelling

ingredient, and the rubber phase and the interface of the polymer blend retain physically the repelling ingredient to some extent but these elastomers substantially exert the action of releasing the active ingredient according to the content of the crystal phase.

Thermoplastic elastomers containing some polar groups, such as ethylene/vinyl acetate copolymers and vinyl chloride type elastomers, polyurethanes elastomers have an intermediate action, and therefore, the blending amount of these elastomer can be freely selected according to the degree of the release of the active ingredient. Ordinarily, a prominent effect is attained when the amide type repelling ingredient is incorporated in an amount of at least 1% by weight. Practically, in view of the durability of the effect and the cost, the amide type ingredient is incorporated in an amount of about 5 to about 20% by weight, though the ingredient is incorporated in an amount of 40 to 50% in some cases. The amount of chlorinated polyethylene is increased or decreased according to the amount of the controlling ingredient, and if the amount of the ingredient is 5 to 10%, the appropriate amount of chlorinated polyethylene is 20 to 40% based on the elastomer, and if the amount of the active ingredient is 10 to 30%, the appropriate amount of chlorinated polyethylene is about 30 to about 70% based on the elastomer.

A mixture of the above-mentioned repelling ingredient, chlorinated polyethylene and thermoplastic elastomer is molded into a sheet, a net, a rod or other molded body by a hot molding machine customarily used for elastomers.

## BRIEF DESCRIPTION OF THE DRAWINGS

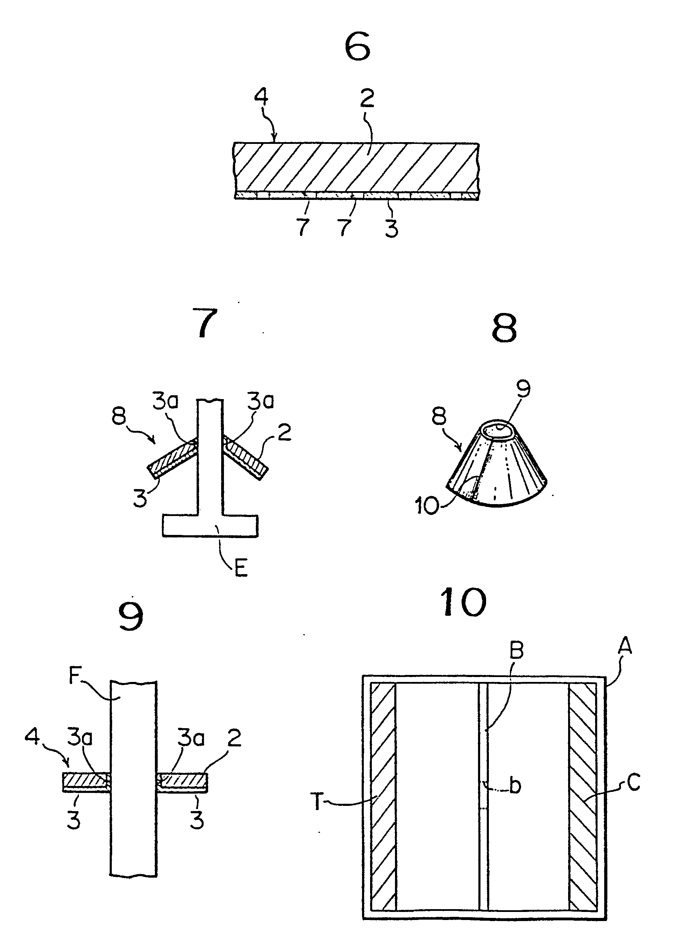

Fig. 1 is a front view showing an example of the application of the harmful insect repellent material, Figs. 2-(a) and 2-(b) are enlarged partial views of the harmful insect repellent material according to one embodiment. Figs. 3 through 5 show another embodiment, in which Fig. 3 is a front view showing the application state, Fig. 4 is a plane view of the harmful insect controlling agent and Fig. 5 is a sectional view showing the application state. Fig. 6 is an enlarged partial sectional view showing another embodiment. Figs. 7 and 8 show still another embodiment, in which Fig. 7 is a partially sectional front view showing the application state and Fig. 8 is a perspective view showing the harmful insect repellent material. Fig. 9 is a partially sectional front view showing another example of the application. Fig. 10 is a diagram illustrating the method of testing the repellent rate.

## MODES FOR CARRYING OUT THE INVENTION

The present invention will now be described with reference to embodiments illustrated in the accompanying drawings. Referring to Fig. 2-(a), a sheet-like harmful insect repellent material 1 comprises a gradually releasing base 2 formed by mixing chlorinated polyethylene, 1,2-polybutadiene, an ethylene/vinyl acetate copolymer or an ethylene/propylene terpolymer as a thermoplastic elastomer, an inorganic filler and dimethyltoluamide as an amide type repelling ingredient and molding the mixture into a sheet and an aluminum foil 3 or a PET film having an aluminum foil vacuum-deposited thereon, which is bonded to one surface of the base 2 as the sticking-preventing layer.

This sticking-preventing layer may be a material not allowing permeation of the chemical transpirated from the gradually releasing base, such as a metal foil, especially a metal foil (particularly aluminum) vacuum-deposited on a synthetic resin film such as PET, or a material allowing permeation of the chemical but not adhering to the setting surface, for example, a Japanese paper, non-woven fabric, glass fiber or metal net, or a material coated with an inorganic substance. If a layer having a metallic gloss is formed by using a material as mentioned above and the harmful insect repellent material is arranged so that this layer is directed to the insect intrusion side, since harmful insects have a property of avoiding a light place, they do not come near to the harmful insect repellent material because they avoid light reflected from the metallic gloss surface, and therefore, the controlling effect is doubled by this effect and the effect of the repellent material per se. In the case where layers formed of a sticking-preventing material are formed on both the surfaces of the gradually releasing base, it is indispensable that at least one layer should be formed of a material allowing permeation of the active ingredient. If the layer is formed of a material not allowing permeation of the active ingredient, the layer may be perforated so that the active ingredient can permeate through the layer.

The harmful insect repellent material 1 is placed on a foundation bed B so that the aluminum foil 3 is located below, as shown in Fig. 1. If a balance C is placed on the repellent material 1, intrusion of harmful insects into the balance C is prevented by the chemical transpirated from the gradually releasing base 2, and bleeding of the chemical or additive of the gradually releasing base 2 to the foundation bed B is prevented by the aluminum foil 3. Therefore, even if the harmful insect repellent material 1 is allowed to

stand still in this state for a long time, sticking of the harmful insect repellent material 1 to the foundation bed B, rendering detachment thereof difficult, can be prevented.

In the present embodiment, if an aluminum foil 31 having holes 7 of an appropriate size is bonded to the top surface of the gradually releasing base 2 as shown in Fig. 2-(b), sticking of the bottom surface of the balance C to the harmful insect repellent material 1 can be prevented while transpiration of the active ingredient is accomplished through the holes 7 and intrusion of harmful insects can be prevented assuredly by light reflected by the aluminum foil 31.

Figs. 3 through 5 show another embodiment, and a harmful insect repellent material 1 having a square shape which is attached to an intermediate portion of a leg E of an automatic food vending machine D, is illustrated. This harmful insect repellent material 4 **into a square shape, forming a hole 5 to be fitted into the leg E while leaving the aluminum foil 3 unperforated, forming one cut line 6 extending between the peripheral edge and the hole 5 for attachment of the harmful insect repellent material 4 to the leg E and forming a plurality of cut lines 61 in the portion 3a, exposed to the hole 5, of the aluminum foil 3. This harmful insect repellent material 4 is arranged so that the aluminum foil 3 is located below, and as shown in Fig. 5, the material 4 is attached to the leg E in the state where the portion, exposed to the hole 5, of the aluminum foil 3 is bent to cover the inner circumference of the hole 5. Sticking of the harmful insect repellent material 4 to the leg E is prevented, and because of the gloss of the aluminum foil 3, gathering of harmful insects is prevented, and even if harmful insects go beyond this aluminum foil 3, further intrusion is prevented because of the gradually releasing base 2. Thus, intrusion of harmful insects is doubly prevented.

If holes 7 having an appropriate size are formed at appropriate intervals on the aluminum foil 3 as the lower surface of the harmful insect repellent material 4 as shown in Fig. 6, since the active ingredient is gradually released from the holes 7, an effect of preventing gathering of harmful insects is enhanced, and also an effect of preventing gathering of harmful insects is attained by reflection of light. In the case where the thickness of the gradually releasing base 2 is so small that sticking to the leg E is not caused, there may be adopted a method in which the aluminum foil 3a is cut off from the portion of the hole 5 and the inner circumferential surface of the hole 5 is directly contacted with the leg E. Incidentally, even if the harmful insect repellent material 1 having holes 7 formed in the aluminum foil 3 is used as shown in Fig. 1, since the aluminum foil 3 is present on the surface to be pressed to the foundation bed B, sticking is prevented.

Figs. 7 and 8 show a modification of the harmful insect repellent material to be attached to the leg E. This harmful insect repellent material 8 is formed to have a frustoconical shape, and a layer of a metal film such as an aluminum foil 3 is formed on the lower surface, that is, the inner circumferential surface. Reference numeral 9 represents a fitting hole to the leg E, reference numeral 10 represents a cut line for fitting, and reference numeral 3a represents an aluminum foil covering the inner circumferential surface of the fitting hole 9. In this harmful insect repellent material 8, insects should pass through an inclined surface of a reverse mountatin shape of the aluminum foil 3 for intrusion, and therefore, passage of harmful insects is substantially impossible and the effect of preventing intrusion of harmful insects is very high. Also in this embodiment, holes 7 may be formed on the aluminum foil 3.

If the above-mentioned harmful insect repellent material 4 or 8 is attached to the midway of a column F or a tree as shown in Fig. 9, intrusion of harmful insects into a building or fruit tree from the ground can be prevented.

In the foregoing embodiments, a gradually releasing base including a repellent material as the active ingredient has been described. Bases including insecticides, vermicides and other chemicals may be similarly applied, and high effects are similarly attained.

The present invention will now be described in detail with reference to the following example.

Example

Diethyltoluamide was incorporated as a repelling ingredient into 300 parts of chlorinated polyethylene (marketed under the tradename of "Daisolac H-135" by Osaka Soda K.K.) so that the mixing ratio of the controlling ingredient to the polymer blend was as shown in the table given below, and the mixture was appropriately granulated by a vertical granulator. Then, the granulation product was mixed with a mixed pellet comprising 300 parts of 1, 2-polybutadiene (marketed under the tradename of "JSR RB-810" by Japan Synthetic Rubber LTD), 200 parts of an ethylene/vinyl acetate copolymer (marketed under the tradename of "Ultrathene UE-634" by Toyo Soda LTD.) and 300 parts of an ethylene/propylene copolymer-(marketed under the tradename of "Tufmer P-0280" by Mitsui Petrolium Chemical Industry LTD.) and the

**is formed by cutting the above-mentioned harmful insect repellent material 1

mixture was extruded at 95 to 100° C by using an extruder to obtain a harmful insect controlling agent in the form of a sheet having a thickness of 2 mm.

Changes of the cockroach repellent rate and the active ingredient residual ratio with the lapse of time in this sheet-like harmful insect repellent material were examined. The obtained results are shown in the following table.

| Mixing Ratio (% by weight) of Repellent Ingredient | Initial Repellent Rate (%) | 2 Weeks | | 1 Month | | 2 Months | |
|---|---|---|---|---|---|---|---|
| | | Residual Ratio (%) | Repellent Rate (%) | Residual Ratio(%) | Repellent Rate (%) | Residual Ratio(%) | Repellent Rate (%) |
| 4 | 90 | 96 | 96 | 79 | 80 | 58 | 87 |
| 6 | 97 | 97 | 100 | 73 | 93 | 60 | 87 |
| 8 | 99 | 94 | 99 | 64 | 96 | 67 | 88 |
| 10 | 98 | 98 | 100 | 60 | 96 | 62 | 91 |

In the above table, the repellent rate was determined according to the following method.

A partition wall B is formed at the center of a vat A [1 m x 1 m x 80 cm (depth)] shown in Fig. 10, and a passage D having a width of 10 cm and a height of 5 cm is formed in the lower central part of the partition wall B. A sheet of 1 m x 80 cm containing the repelling ingredient is placed in a space T and a sheet of 1 m x 80 cm free of the repelling ingredient is placed in a space C to define rooms T and C. Then, 30 cockroaches are set free substantially at the center of the partition wall B, and after the lapse of two hours, the number of cockroaches present in the room C is counted and the ratio is calculated as the repellent rate.

INDUSTRIAL UTILIZABILITY

As is apparent from the foregoing description, the harmful insect repellent material of the present invention is excellent in the repellent effect and retains this excellent effect over a long period.

## Claims

1. A repellent material for insects provided by mixing at least one repelling ingredient chosen in the group comprising the amide type repellents of N,N-diethyl-m-toluamide and N-butylacetoanilide and the amide ester type repellent of propyl N,N-diethylsuccinnamate, with chlorinated polyethylene so as to form a granular mixture, and kneading said mixture with a thermoplastic elastomer other than chlorinated polyethylene.

2. A repellent material as claimed in claim 1, wherein said at least one repelling ingredient is used in combination with an insecticide, a vermicide, a rodenticide, a repellent for rodential animals or a repellent for birds.

3. A repellent material as claimed in claim 1 or 2, wherein said thermoplastic elastomer has a melting point of lower than 100° C and is chosen in the group comprising the polyolefines of ethylene/propylene copolymer, the styrene-butadiene type elastomers of styrene/butadiene copolymer, the polyurethane type elastomers, the polyester type elastomers, the ethylene/propylene rubbers, the ethylene/ethyl acrylate copolymers, the ethylene/vinyl acetate copolymers and the syndiotactic 1,2-polybutadiene.

4. A repellent material as claimed in claim 1, 2 or 3, wherein the amide type repellent is incorporated in an amount of from 5 to 20 wt%.

5. A repellent material as claimed in claim 1, 2 or 3, wherein the amide type repellent is incorporated in

an amount of from 40 to 50 wt%.

6. A repellent material as claimed in anyone of claims 1 to 4, wherein the chlorinated polyethylene is used in an amount of from 20 to 40 % based on the elastomer, when the repelling ingredient is incorporated in an amount of from 5 to 10 %.

7. A repellent material as claimed in anyone of claims 1 to 5, wherein the chlorinated polyethylene is used in an amount of from 30 to 70 % based on the elastomer, when the repelling ingredient is used in an amount of from 10 to 30 %.

**Revendications**

1. Substance répulsive pour insectes obtenue en mélangeant au moins un ingrédient répulsif choisi dans le groupe comprenant les répulsifs N,N-diéthyl-m-toluamide et N-butylacétoanilide du type amide et le répulsif N,N-diéthylsuccinnamate de propyle du type ester d'amide, avec un polyéthylène chloré, de manière à former un mélange granulaire, et à malaxer ledit mélange avec un élastomère thermoplastique autre que le polyéthylène chloré.

2. Substance répulsive selon la revendication 1, dans laquelle ledit ingrédient répulsiF est utilisé en combinaison avec un insecticide, un vermicide, un agent de destruction de rongeurs, un répulsif pour rongeurs ou un répulsif pour oiseaux.

3. Substance répulsive selon la revendication 1 ou 2, dans laquelle ledit élastomère thermoplastique possède un point de fusion d'une valeur inférieure à 100 °C est est choisi dans le groupe comprenant les polyoléfines constituées par les copolymères éthylène/propylène, les élastomères du type styrène-butadiène constitués par les copolymères styrène-butadiène, les élastomères du type polyuréthane, les élastomères du type polyester, les caoutchoucs d'éthylène/propylène, les copolymères éthylène/acrylate d'éthyle, les copolymères éthylène/acétate de vinyle et le polybutadiène-1,2 syndiotactique.

4. Substance répulsive selon la revendication 1, 2 ou 3, dans laquelle le répulsif du type amide est incorporé dans une proportion allant de 5 à 20% en poids.

5. Substance répulsive selon la revendication 1, 2 ou 3, dans laquelle le répulsif du type amide est incorporé dans une proportion allant de 40 à 50% en poids.

6. Substance répulsive selon l'une quelconque des revendications 1 à 4, dans laquelle le polyéthylène chloré est utilisé dans une proportion de 20 à 40% par rapport à l'élastomère, lorsque l'ingrédient répulsif est incorporé dans une proportion de 5 à 10%.

7. Substance répulsive selon l'une quelconque des revendications 1 à 5, dans laquelle le polyéthylène chloré est utilisé dans une proportion de 30 à 70% par rapport à l'élastomère, lorsque l'ingrédient répulsif est utilisé dans une proportion de 10 à 30%.

**Ansprüche**

1. Ein Abwehrmaterial für Insekten, das durch Mischen von wengistens einer Abwehringredienz, die aus der die Abwehrmittel vom Amid-Typ N,N-Diethyl-m-Toluamid und N-Butylacetoanilid und das Abwehrmittel vom Amidester-Typ Propyl-N, N-Diethylsuccinnamat umfassenden Gruppe ausgewählt ist, mit chloriertem Polyethylen, um so eine körnige Mischung zu bilden, und durch Kneten der Mischung mit einem thermoplastischen Elastomer, das ein anderes als das chlorierte Polyethylen ist, hergestellt ist.

2. Ein Abwehrmaterial nach Anspruch 1,
wobei die wenigstens eine Abwehringredienz in Kombination mit einem Insektizid, einem Vermizid, einem Rodenticid, einem Abwehrmittel für Nagetiere oder einem Abwehrmittel für Vögel verwendet wird.

3. Ein Abwehrmaterial nach Anspruch 1 oder 2,

wobei das thermoplastische Elastomer einen Schmelzpunkt kleiner als 100° C aufweist und aus der die Polyolefine des Ethylen/Propylen-Copolymers, die Styren-Butadien-Typ-Elastomers des Styren/Butadien-Copolymers, das Polyurethan-Typ Elastomer, das Polyester-Typ-Elastomer, die Ethylen/Propylengummis, das Ethylen/Ethyl-Acrylat-Copolymer, das Ethylen/Vinylacetat Copolymer und das syndiotaktische, 1,2-Polybutadien umfassenden Gruppe ausgewählt ist.

4. Ein Abwehrmaterial nach Anspruch 1, 2 oder 3,
wobei das Abwehrmittel vom Amid-Typ in einer Menge von 5 bis 20 Gewichts% inkorporiert ist.

5. Ein Abwehrmaterial nach Anspruch 1, 2 oder 3,
wobei das Abwehrmittel vom Amid-Typ in einer Menge von 40 bis 50 Gewichts% inkorporiert ist.

6. Ein Abwahrmaterial nach wenigstens einem der Ansprüche 1 bis 4,
wobei das chlorierte Polyethylen in einer Menge von 20 bis 40%, basierend auf dem Elastomer, verwendet wird, wenn die Abwehringredienz in einer Menge von 5 bis 20% inkorporiert ist.

7. Ein Abwehrmaterial nach wenigstens einem der Ansprüche 1 bis 5,
wobei das chlorierte Polyethylen in einer Menge von 30 bie 70%, basierend auf dem Elastomer verwendet wird, wenn die Abwehringredienz in einer Menge von 10 bis 30% verwendet wird.

1

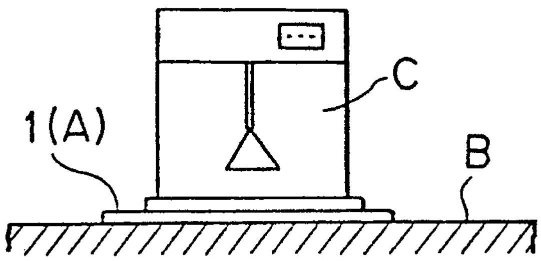


2

(イ) (ロ)

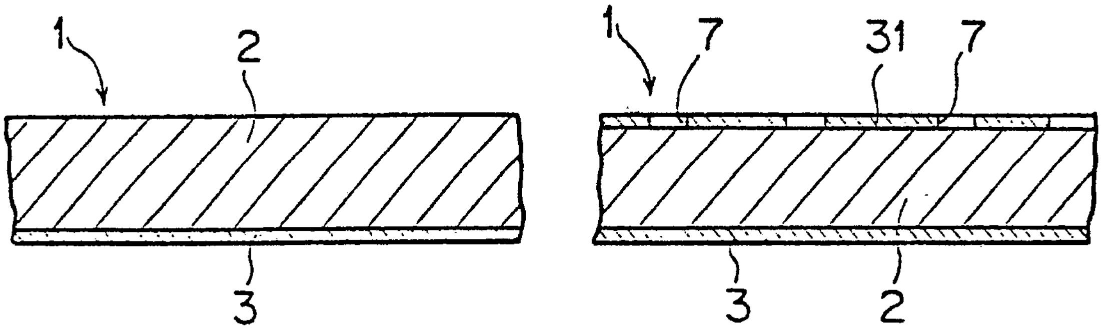


3

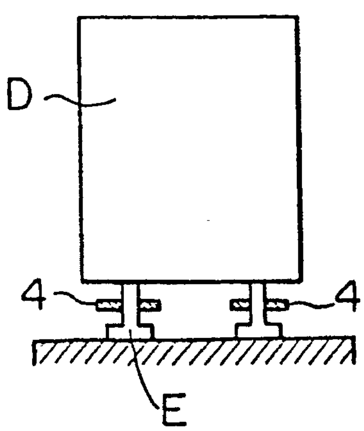


4

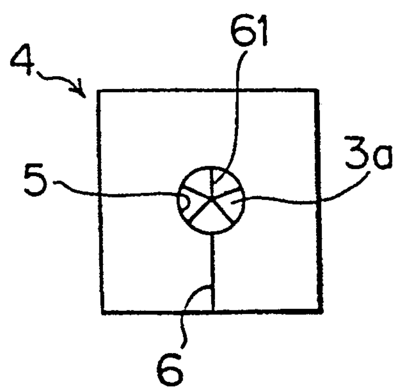


5

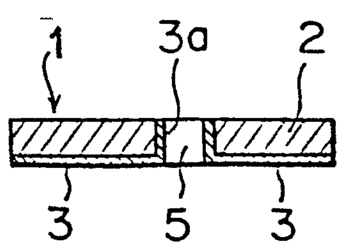

6

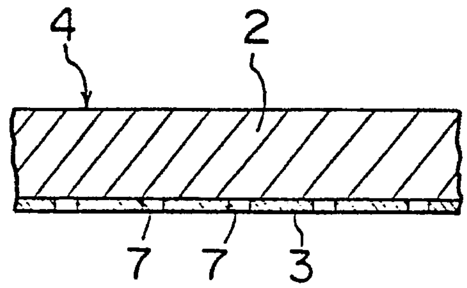


7

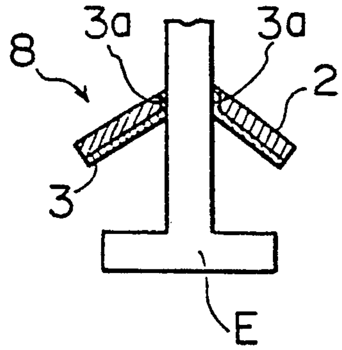


8

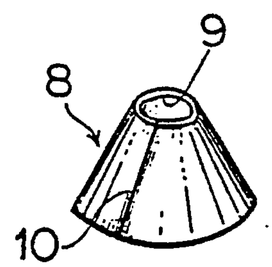


9

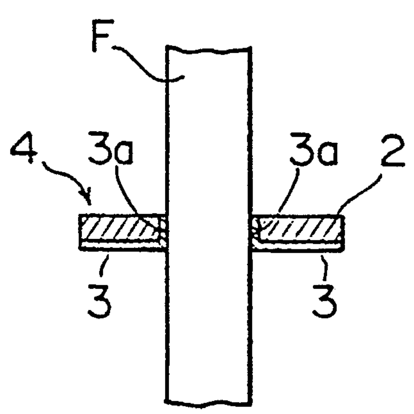


10